(19) Europäisches Patentamt
European Patent Office
Office européen des brevets

(11) **EP 2 911 765 B1**

(12) **EUROPÄISCHE PATENTSCHRIFT**

(45) Veröffentlichungstag und Bekanntmachung des Hinweises auf die Patenterteilung:
**07.12.2016   Patentblatt 2016/49**

(51) Int Cl.:
***B01D 39/16*** (2006.01)      ***B01D 39/18*** (2006.01)

(21) Anmeldenummer: **13779798.1**

(22) Anmeldetag: **17.10.2013**

(86) Internationale Anmeldenummer:
**PCT/EP2013/071715**

(87) Internationale Veröffentlichungsnummer:
**WO 2014/063988 (01.05.2014 Gazette 2014/18)**

(54) **FILTERMATERIAL MIT ERHÖHTER STANDZEIT UND DIESES FILTERMATERIAL ENTHALTENDES FILTERELEMENT**

FILTER MATERIAL WITH LONG SERVICE LIFE, AND FILTER ELEMENT CONTAINING SAID FILTER MATERIAL

MATÉRIAU DE FILTRE À DURÉE D'UTILISATION ACCRUE ET ÉLÉMENT FILTRANT CONTENANT CE MATÉRIAU DE FILTRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.10.2012   DE 102012219409**

(43) Veröffentlichungstag der Anmeldung:
**02.09.2015   Patentblatt 2015/36**

(73) Patentinhaber: **Neenah Gessner GmbH**
**83052 Bruckmühl (DE)**

(72) Erfinder:
• **DEMMEL, Andreas**
  **83620 Feldkirchen-Westerham (DE)**
• **KEPPLER, Christof**
  **83620 Vagen (DE)**
• **HÄRINGER, Christoph**
  **87642 Halblech (DE)**

(74) Vertreter: **Hoffmann Eitle**
**Patent- und Rechtsanwälte PartmbB**
**Arabellastraße 30**
**81925 München (DE)**

(56) Entgegenhaltungen:
**WO-A1-03/020401     DE-A1- 2 723 528**
**GB-A- 572 126**

Bemerkungen:
Die Akte enthält technische Angaben, die nach dem Eingang der Anmeldung eingereicht wurden und die nicht in dieser Patentschrift enthalten sind.

EP 2 911 765 B1

**Beschreibung**

Die Erfindung betrifft ein Filtermaterial mit verbesserter Standzeit zur Abtrennung von flüssigen und festen Verunreinigungen aus Flüssigkeiten, ein Filterelement, das dieses Filtermaterial umfasst, die Verwendung des Filtermaterials zur Filtration von Flüssigkeiten und ein Verfahren zur Trennung von zwei nicht miteinander mischbaren Flüssigkeiten.

**Stand der Technik**

In vielen Bereichen der Filtration steigen die Anforderungen an den Reinheitsgrad von filtrierten Flüssigkeiten. Das gilt sowohl für industriell genutzte Flüssigkeiten, wie zum Beispiel Kraftstoffe für Verbrennungsmotoren, Schmieröle oder Hydrauliköle, als auch für Flüssigkeiten im Lebensmittelbereich und für medizinische oder pharmazeutische Anwendungen. So stieg zum Beispiel bei der Filtration von Dieselkraftstoffen für Verbrennungsmotoren die Anforderung für den Abscheidegrad nach ISO 19438 für 4 μm große Partikel in den letzten 15 Jahren von 50% auf 96% und wird in Zukunft bei über 99% liegen. Daher wurden in der Vergangenheit große Anstrengungen unternommen, den Abscheidegrad der eingesetzten Filtermaterialien laufend zu erhöhen. Leider verhalten sich Abscheidegrad und Standzeit in den meisten Fällen gegenläufig, das heißt, dass sich mit steigendem Abscheidegrad die Staubspeicherfähigkeit und somit die Standzeit verschlechtert und umgekehrt. Eine Möglichkeit, die Standzeit und somit die Lebensdauer eines Filterelements bei steigendem Abscheidegrad zu mindestens gleich hoch zu halten, ist die Vergrößerung der Filterfläche. Diese vergrößert aber zwangsläufig das gesamte Filterelement und ist aus Platzgründen in vielen Fällen unerwünscht.

Eine weitere Möglichkeit, die Standzeit bei hochabscheidenden Filtermedien zu verbessern, ist die Verwendung einer Vorfilterlage. Die Vorfilterlage befindet sich auf der angeströmten Seite des Filtermaterials und besitzt deutlich größere Poren als die hochabscheidende Filterlage.

DE 10 2010 011 512 A1 beschreibt zum Beispiel ein solches Gradientenfilter. Je höher die Anforderungen an einen hohen Abscheidegrad bei einer gleichzeitig hohen Standzeit steigen, desto mehr aufeinander abgestimmte Filterlagen werden benötigt, um diesen Anforderungen gerecht zu werden. Jede zusätzliche Lage erhöht aber die Dicke und die Kosten des gesamten Filtermaterials.

Imprägnierte Filtermaterialien bieten die Möglichkeit, die Standzeit bei gleichbleibender Dicke zu erhöhen, indem man das Filtermaterial nur einseitig imprägniert. Auf der nicht imprägnierten Seite werden die Fasern nicht mit Imprägniermittel verklebt und behalten somit ihre offene Porenstruktur, während die Poren auf der imprägnierten Seite durch das Imprägniermittel verkleinert werden. Es bildet sich daher ein Gradient über die Dicke des Filtermaterials aus, der eine hohe Standzeit und einen hohen Abscheidegrad in sich vereint, wobei immer die nicht imprägnierte Seite angeströmt wird. Bei geeigneter Auswahl der eingesetzten Fasern und des Imprägniermittels kann das einseitig imprägnierte Filtermaterial zusätzlich zur Trennung zweier nicht miteinander mischbarer Flüssigkeiten verwendet werden. Als Beispiel für ein solches Flüssigkeitsgemisch sei ein mit Wasser verunreinigter Kraftstoff genannt. Das Wasser ist hierin die disperse und der Kraftstoff die kontinuierliche Phase. Treffen die fein verteilten Wassertröpfchen auf hydrophile, nicht imprägnierte Fasern, so werden sie dort festgehalten. Laufend neu hinzukommende Wassertröpfchen vereinen sich mit den Wassertröpfchen auf den Fasern und bilden mit der Zeit immer größer werdende Tropfen, die sich schließlich durch den hydrostatischen Druck ablösen und durch die imprägnierte, hydrophobe Seite des Filtermaterials hindurchgedrückt werden. Auf der Reinseite fließen die Wassertropfen auf Grund ihrer höheren Dichte und der Schwerkraft an der imprägnierten Oberfläche des Filtermaterials entlang nach unten und werden in einem Sammelraum gesammelt und ausgeschleust. Durch diesen Effekt ändert sich das Wasserabscheidungsprinzip von einem schmutzseitigen Wasserabscheider zu einem Koaleszermedium.

US 3,096,230 A beschreibt ein einseitig imprägniertes Filterpapier, bei dem das Imprägniermittel zu etwa einem Drittel der Papierdicke in das Papier eindringt. Das gesamte Papier ist mit einem thermisch härtbaren Harz vorimprägniert.

US 3,106,528 A legt ein Filterpapier offen, das zwar nur einseitig imprägniert wird, bei dem das Imprägniermittel jedoch durch die gesamte Papierdicke dringt. Dabei wird durch Auswahl der geeigneten Viskosität des Imprägniermittels und des Drucks, mit dem das Imprägniermittel in das Papier gepresst wird, erreicht, dass das meiste Imprägniermittel auf der imprägnierten Seite bleibt und nur wenig Imprägniermittel auf die Gegenseite dringt.

In US 3,116,245 A wird ein Filterpapier aus 100% Baumwolllinters offenbart, das zweifach imprägniert ist. Zunächst wird ein Harz auf beide Seiten aufgebracht und anschließend wird das Filterpapier bis zur Hälfte seiner Dicke einseitig mit einem anderen Harz imprägniert. Die Imprägnierung wird in einer Weise durchgeführt, dass sich über die ganze Dicke die Porengröße nicht wesentlich verändert. Entsprechend besitzt dieses Filterpapier keine bindemittelfreie Seite.

US 4,119,543 A beschreibt ein einseitig imprägniertes Filtermaterial aus mindesten 70% Zellulose. Bei diesem Filtermaterial wird die Imprägnierung in Form eines Musters aufgebracht. Dieses Muster enthält Flächen mit Imprägniermittel und Flächen, die frei von Imprägniermittel sind.

Die DE 27 23 528 A1 befasst sich mit Faltenfiltern für Luft- oder Kohlenwasserstofföle. Die Filter sind mit einer teilweisen, einseitigen Imprägnierung versehen und enthalten 9 bis 15 Gew.% Harze. Die Imprägnierung dringt von der Siebseite her bis zu einer Tiefe von 15 bis 45% der Gesamtdicke ein. Es wird vorgeschlagen, bei der Herstellung der Filter die Papierfasern mit 0,5 bis 7 Gew.% eines Nassfestigkeit verleihenden Harzes gleichmäßig zu imprägnieren. In den Beispielen und Vergleichsbeispielen werden hierzu dem Faserbrei 0,7 Gew.% Nassfestigkeit verleihendes Harz zugesetzt.

In GB 572,126 werden Filter beschrieben, die oberflächlich mit einem Harz imprägniert sind, um die Form des Filters zu festigen. Hierzu werden beispielsweise lose Baumwollreste mit einem Stück Mull oder einem anderen Gewebe umwickelt und die exponierten Bereiche der Baumwollreste mit dem Harz imprägniert.

Die WO 03/020401 A1 befasst sich mit der Herstellung von Nonwovens mit erhöhter Festigkeit. Diese Kompositstrukturen enthalten ein Nonwoven und eine die Festigkeit und Steifheit erhöhenden Komponente, die aus Filamenten, einem Polymer oder einem Polymergemisch, Wax oder einem waxgemisch ausgewählt sein kann.

Es besteht der Bedarf an einem Filtermaterial insbesondere für die Filtration von Flüssigkeiten, das die gestiegenen Anforderungen an hohe Abscheidegrade und hohe Standzeiten erfüllt und gleichzeitig zur Trennung nicht miteinander mischbarer Flüssigkeiten eingesetzt werden kann.

## Zusammenfassung der Erfindung

Diese Aufgabe wird erfindungsgemäß durch ein Filtermaterial gelöst, das sich insbesondere für die Filtration von Flüssigkeiten eignet und das nur auf einer Seite mit einem Bindemittel in der Weise imprägniert ist, dass die Gegenseite frei von Bindemittel ist und dass das Bindemittel von der imprägnierten Seite zur gegenüberliegenden Seite mindestens die Hälfte und höchstens drei Viertel der Dicke des Filtermaterials durchdringt. Der Anteil des trockenen Bindemittels am Gesamtgewicht des Filtermaterials beträgt 0,5 - 50 Gew.%.

## Detaillierte Beschreibung der Erfindung

Das erfindungsgemäße Filtermaterial umfasst bevorzugt zumindest ein Material ausgewählt aus der Gruppe bestehend aus nassgelegten Vliesen, trockengelegten Vliesen, Geweben und Schäumen.

Unter den trockengelegten Vliesen sind u.a. trockengelegte Faservliese, Meltblownvliese und Spinnvliese zu verstehen.

Trockengelegte Faservliese bestehen aus Fasern mit endlicher Länge. Zur Herstellung von trockengelegten Faservliesen können sowohl natürliche als auch synthetische Fasern zum Einsatz kommen. Beispiele für natürliche Fasern sind Zellulose, Wolle, Baumwolle und Flachs. Synthetische Fasern sind zum Beispiel Polyolefinfasern, Polyesterfasern, Polyamidfasern, Polytetrafluorethylenfasern und Polyphenylensulfidfasern. Die eingesetzten Fasern können entweder gerade oder gekräuselt sein. Die trockengelegten Stapelfaservliese können auch luftgelegte Faservliese sein. Zur Verfestigung kann das trockengelegte Faservlies ein- oder mehrkomponentige Schmelzbindefasern enthalten, die bei einer Temperatur unterhalb der Schmelztemperatur der anderen Fasern ganz oder teilweise aufschmelzen und das Vlies verfestigen. Die Herstellung der trockengelegten Faservliese erfolgt nach dem bekannten Stand der Technik wie in dem Buch "Vliesstoffe", W. Albrecht, H. Fuchs, W. Kittelmann, Wiley-VCH, 2000 beschrieben. Die trockengelegten Faservliese können durch die bereits erwähnten ein- oder mehrkomponentigen Schmelzbindefasern verfestigt werden. Weitere Verfestigungsmöglichkeiten sind zum Beispiel Vernadeln, Wasserstrahlvernadeln oder das Tränken oder Besprühen des Vlieses mit flüssigen Bindern mit anschließender Trocknung.

Meltblownvliese bestehen aus polymeren Endlosfasern. Zur Herstellung der Meltblownvliese für das erfindungsgemäße Filtermaterial wird der in der Fachwelt bekannte Meltblownprozess verwendet, wie er z.B. in Van A. Wente, "Superfine Themoplastic Fibers", Industrial Engineering Chemistry, Vol. 48, S.1342 - 1346 beschrieben ist. Geeignete Polymere sind zum Beispiel Polyethylentherephtalat, Polybutylentherephtalat, Polyethylennaphtalat, Polybutylennaphtalat, Polyamid, Polyphenylensulfid und Polyolefine. Die typischen Faserdurchmesser bewegen sich dabei bevorzugt zwischen 0,5 - 10 $\mu$m und besonders bevorzugt zwischen 0,5 - 3 $\mu$m. Den Polymeren können je nach Anforderungen noch Additive, wie zum Beispiel Hydrophilierungsmittel, Hydrophobierungsmittel, Kristallisationsbeschleuniger oder Farben, zugemischt werden. Je nach Anforderung kann die Oberfläche der Meltblownvliese durch Oberflächenbehandlungsverfahren, wie zum Beispiel Coronabehandlung oder Plasmabehandlung, in ihrer Eigenschaft verändert werden. Außerdem können die Meltblownvliese, falls erforderlich, mittels eines Kalanders verdichtet werden. Spinnvliese bestehen ebenfalls aus polymeren Endlosfasern, deren Faserdurchmesser aber meistens deutlich größer ist als der von Meltblownfasern. Spinnvliese werden nach dem der Fachwelt bekannten Spinnvliesverfahren hergestellt, wie es zum Beispiel in den Patentschriften US 4,340,563A, US 3,802,817A, US 3,855,046A und US 3,692,618A beschrieben ist. Für das Spinnvliesverfahren geeignete Polymere sind z.B. Polyethylentherephtalat, Polybutylentherephtalat, Polyethylennaphtalat, Polybutylennaphtalat, Polyamid, Polyphenylensulfid und Polyolefine.

Unter Schäumen sind alle offenzelligen Schäume aus organischen Polymeren zu verstehen. Durch ihre offenzellige Struktur sind sie luftdurchlässig und eignen sich für verschiedenste Filtrationsaufgaben. Die Herstellung geeigneter Schäume ist beispielhaft in den Schriften US 3,171,820 A, DE 1504551 A, DE 601435 A und GB 1111928 A beschrieben.

Nassgelegte Vliese oder Papiere im Sinne dieser Erfindung sind alle Vliese, die mit den in der Fachwelt bekannten Nasslegeprozessen zur Herstellung von Filterpapieren erzeugt werden können. Die Papiere für das erfindungsgemäße Filtermaterial bestehen bevorzugt aus natürlichen, synthetischen, anorganischen Fasern oder einer Mischung daraus. Beispiele für natürliche Fasern sind Zellulose, Baumwolle, Wolle und Hanf, wobei das eingesetzte Zellulosematerial holzfreie und/oder holzhaltige Zellulosen von Nadel- und/oder Laubbäumen, Regeneratzellulosen und fibrillierte Zellulosen sein kann. Anorganische Fasern sind zum Beispiel Glasfasern, Basaltfasern, Quarzfasern und Metallfasern. Als Synthesefasern eignen sich zum Beispiel Polyesterfasern, Polypropylenfasern, Mehrkomponentenfasern mit unterschiedlichen Schmelzpunkten der einzelnen Komponenten, Polyamidfasern und Polyacrylnitrilfasern. Der Titer der Synthesefasern beträgt typischerweise 0,1 dtex - 8,0 dtex, besonders bevorzugt 0,5 dtex - 5 dtex und die Schnittlänge typischerweise 3 mm - 20 mm, besonders bevorzugt 4 mm - 12 mm. Die Papiere für das erfindungsgemäße Filtermaterial können zu 100% aus natürlichen, synthetischen oder anorganischen Fasern bestehen, es ist aber auch jede beliebige Mischung aus diesen Faserarten möglich. Die richtige Zusammensetzung weiß der Fachmann auf Grund seines Wissens und seiner Erfahrung jeweils nach den geforderten Papiereigenschaften gezielt auszuwählen. Die Papierlage kann aus mehreren Schichten bestehen, die entweder in einer Papiermaschine mit einem dazu geeigneten Stoffauflauf erzeugt und zusammengeführt werden oder aus einzelnen Papierbahnen, die miteinander in einem separaten Arbeitsgang verbunden werden. Die einzelnen Schichten können dabei in ihren Eigenschaften unterschiedlich ausgestaltet sein.

Filtermaterialien für die Filtration von Flüssigkeiten sind üblicherweise mit einem Bindemittel imprägniert. Das Bindemittel wird durch das Imprägnieren auf das Filtermaterial aufgetragen und durchdringt zumindest einen Teil des Filtermaterials. Dabei bleibt die imprägnierte Oberfläche des Filtermaterials insbesondere für Flüssigkeiten durchlässig. Die Imprägnierung verleiht dem Filtermaterial eine hohe Steifigkeit und eine Beständigkeit gegenüber aggressiven Flüssigkeiten, wie zum Beispiel heißen Motorölen, Hydraulikölen, Kraftstoffen, Säuren und Laugen. Da die meisten Filtermaterialien in einem weiteren Verarbeitungsschritt gefaltet werden, ist eine hohe Steifigkeit gefordert. Steife Filtermaterialien lassen sich leichter falten und die Falten widerstehen dem Filtrationsdruck auch unter hohen Durchflussraten und Temperaturen.

Üblicherweise werden die Filtermaterialien in zum Beispiel einem Tauchbad vollständig mit dem Bindemittel imprägniert und anschließend getrocknet. Die vollständige Imprägnierung hat den Vorteil, dass alle Fasern fest miteinander verbunden sind und mit dem Bindemittel umhüllt sind. Dadurch sind die Fasern und somit auch das Filtermaterial gegen den Angriff aggressiver Flüssigkeiten geschützt. Dabei kann durch Auswahl des geeigneten Bindemittels die optimale Steifigkeit erreicht werden.

Bindemittel verkleinern aber auch die Poren im Filtermaterial, indem sie die Zwischenräume zwischen den einzelnen Fasern ausfüllen. Damit wird zwar der Abscheidegrad verbessert, gleichzeitig verringert sich aber auch die Luftdurchlässigkeit und vor allem die Standzeit und somit die Lebensdauer des Filtermaterials. Im erfindungsgemäßen Filtermaterial ist nur eine Seite mit Bindemittel imprägniert, so dass die gegenüberliegende Seite frei von Bindemittel ist. Dabei kann diese eine Seite teilweise, beispielsweise mit Mustern, die beliebige geometrische Formen haben können, wie beispielsweise Punkte, gerade Linien, gekrümmte Linien, sich kreuzende Linien, Vierecke, Rauten und Dreiecke, oder durchgehend, d.h. über die gesamte Fläche, imprägniert sein, und ist bevorzugt durchgehend imprägniert. Unter der imprägnierten Seite wird der Teil des Filtermaterials verstanden, der durch die Oberfläche des Filtermaterials begrenzt ist, auf der das Bindemittel aufgetragen ist. Die gegenüberliegende Seite bezeichnet den Teil des Filterpapiers, der durch eine Oberfläche begrenzt ist, die der Oberfläche der imprägnierten Seite gegenüberliegt und kein Bindemittel enthält. Vorzugsweise ist das erfindungsgemäße Filtermaterial flächig, d.h. es besitzt zwei gegenüberliegende Oberflächen, die besonders bevorzugt parallel zueinander angeordnet sind. Durch eine einseitig aufgebrachte Imprägnierung, zum Beispiel durch einen Walzenauftrag oder durch Besprühen, wird die gleiche Steifigkeit und der gleiche Abscheidegrad erreicht, wie bei einem vollständig durchimprägnierten Filtermaterial, die Standzeit ist aber deutlich höher und entspricht einem nicht imprägnierten Filtermaterial. Damit dieser Effekt erreicht wird, muss die nicht imprägnierte Seite des einseitig imprägnierten Filtermaterials angeströmt werden.

Die Flächenmasse ist im erfindungsgemäßen Filtermaterial bevorzugt 50 g/m$^2$ bis 400 g/m$^2$ und besonders bevorzugt von 100 g/m$^2$ bis 300 g/m$^2$. Die Dicke des erfindungsgemäßen Filtermaterials ist bevorzugt 0,1 mm bis 2,0 mm und besonders bevorzugt von 0,5 mm bis 1,5 mm. Dabei bezieht sich die Dicke des erfindungsgemäßen Filtermaterials auf die Distanz zwischen der Oberfläche, auf der das Bindemittel aufgetragen ist und der gegenüberliegenden Oberfläche. Das erfindungsgemäße Filtermaterial hat bevorzugt eine Luftdurchlässigkeit von 1 1/m$^2$s bis 1500 1/m$^2$s und besonders bevorzugt von 5 1/m$^2$s bis 800 1/m$^2$s. Die Porosität des erfindungsgemäßen Filtermaterials ist bevorzugt von 50 % - 90 % und besonders bevorzugt von 60 % - 80 %. Die Porosität bezieht sich dabei auf das Verhältnis der tatsächlichen Dichte des Filtermediums zu der durchschnittlichen Dichte der eingesetzten Fasern. Bevorzugt besitzt das erfindungsgemäße Filtermaterial einen Harzgehalt von 0,5 % - 50 % und besonders bevorzugt von 5 % - 20 %. Vorzugsweise hat das erfindungsgemäße Filtermaterial einen Abscheidegrad für 4 $\mu$m-Partikel nach ISO 19438 von mind. 50 %, besonders bevorzugt von mind. 80 % und eine Standzeit nach ISO 19438 von mindestens 1,0 g, besonders bevorzugt von mindestens 1,5 g. Die Wasserabscheidung nach ISO 19332 bei einer Anströmung von 4,5 ml/(cm$^2$*min) ist im erfindungsgemäßen Filtermaterial bevorzugt mindestens 30 %, besonders bevorzugt von mindestens 40 %.

Es hat sich herausgestellt, dass einseitig imprägnierte Filtermaterialien mit einer Flächenmasse von 50 g/m$^2$ bis 400 g/m$^2$, bevorzugt von 100 g/m$^2$ bis 300 g/m$^2$, einer Dicke von 0,1 mm bis 2,0 mm, bevorzugt von 0,5 mm bis 1,5 mm, einer Luftdurchlässigkeit von 1 1/m$^2$s bis 1500 1/m$^2$s, bevorzugt von 5 1/m$^2$s bis 800 1/m$^2$s und einer Porosität von 50 % - 90 %, bevorzugt von 60 % - 80 % und einem Harzgehalt von 0,5 % - 50 %, bevorzugt von 5 % - 20 % besonders geeignet sind. Bei solchermaßen ausgestalteten Filtermaterialien ist die Standzeit nach ISO 19434 deutlich höher als bei vergleichbaren durchimprägnierten Filtermaterialien mit einem Meltblownvlies als Vorfilter. Dieser Effekt war nicht zu erwarten. Die einseitig imprägnierten Papiere nach dem bisherigen Stand der Technik besitzen eine deutlich höhere Luftdurchlässigkeit und Dicke und sind in Bezug auf Standzeit und Wasserabscheidung den vergleichbaren durchimprägnierten Filtermaterialien mit einer Meltblownvlies als Vorfilter höchstens gleichwertig.

Wird das erfindungsgemäße Filtermaterial zur Trennung eines Flüssigkeitsgemisches aus zwei nicht miteinander mischbaren Flüssigkeiten eingesetzt, so wird es durch die Auswahl der Hydrophobie bzw. der Hydrophilie der Fasern und des Imprägniermittels so gestaltet, dass die Tröpfchen der dispersen Phase des Flüssigkeitsgemisches bevorzugt an den Fasern gesammelt und vergrößert werden, während die Imprägnierung einen leichten Durchgang der kontinuierlichen Phase gewährleistet und gleichzeitig den Durchgang der Tropfen der dispersen Phase erschwert. Die Fasern und die Imprägnierung unterscheiden sich also in ihrer Hydrophilie bzw. Hydrophobie. Beispiele für hydrophile Fasern sind Zellulosefasern, Baumwollfasern, Polyamidfasern und hydrophil beschichtete Fasern. Hydrophobe Fasern sind z.B. Polyolefinfasern, Teflonfasern und hydrophob beschichtete Fasern.

Unter nicht mischbaren Flüssigkeiten werden solche Flüssigkeiten verstanden, die keine homogene Mischung oder Lösung miteinander bilden, sondern ein Zwei-Phasen-Gemisch, wie z.B. Öl und Wasser. Im Sinne der Erfindung sind zwei nicht miteinander mischbare Flüssigkeiten dadurch gekennzeichnet, dass sich bei Raumtemperatur (20 °C) höchstens 10 Gew.% und bevorzugt höchstens 1 Gew.% der einen Flüssigkeit in der jeweils anderen Flüssigkeit bezogen auf 100 Gew.% der zwei nicht miteinander mischbaren Flüssigkeiten lösen.

Als Bindemittel eignen sich zum Beispiel Phenolharze oder Epoxidharze aus alkoholischen Lösungen, aber auch wässrige Dispersionen zum Beispiel von Acrylaten, Styrol-Butadienen, Polyvinylacetaten, Phenolharzen oder Polyvinylchlorid. Eine weitere mögliche Klasse von Bindemittel sind wässrige Lösungen von zum Beispiel Polyvinylalkohol, Melaminharz oder Harnstoffharz. Neben den flüssigen Bindemitteln können auch feste, pulverförmige Binder aus thermoplastischen Polymeren zum Einsatz kommen.

Je nach Bedarf können dem Bindemittel noch verschiedene Hilfsstoffe zugemischt werden, wie zum Beispiel Hydrophilierungsmittel, Hydrophobierungsmittel, Flammschutzmittel oder Farben.

Sollte das Filtermaterial eine dichtere und eine offenere Seite besitzen, so wird die Imprägnierung bevorzugt auf die dichtere Seite aufgebracht. Die dichtere Seite unterscheidet sich von der offeneren Seite durch eine kleinere durchschnittliche Porengröße, wobei die durchschnittliche Porengröße der dichteren Seite bevorzugt mindestens 5 %, mehr bevorzugt mindestens 10 % und besonders bevorzugt mindestens 20 % kleiner ist als die der offeneren Seite.

Der Auftrag des Bindemittels wird zum Beispiel über die Viskosität der Bindemittellösung oder durch geeignete Einstellungen der Verfahrensparameter so gesteuert, dass das Bindemittel von der imprägnierten Oberfläche des Filtermaterials zur gegenüberliegenden Seite mindestens die Hälfte aber höchstens drei Viertel seiner Dicke, bevorzugt zwischen zwei Drittel und drei Viertel der Dicke durchdringt. Die Gegenseite bleibt im Wesentlichen bindemittelfrei. Geeignete Imprägnierverfahren sind z.B. Walzenauftrag oder Besprühen. Beim Walzenauftrag sind die Verfahrensparameter, mit denen die Eindringtiefe des Bindemittels gesteuert werden kann, beispielsweise die Filmdicke des Bindemittels auf der Auftragswalze, die Viskosität des Bindemittels sowie der Feststoffgehalt des Bindemittels. Besteht das Auftragswerk aus zwei Walzen, beispielweise einer Schöpfwalze, die das Bindemittel aus einem Vorratsgefäß, beispielsweise einer Wanne, übernimmt und dann auf die Auftragswalze überträgt sowie einer Auftragswalze, die das Bindemittel auf das Filtermaterial aufbringt, kann die geeignete Filmdicke durch die Differenzgeschwindigkeit der beiden Walzen zueinander und den Spalt zwischen den Walzen eingestellt werden. Beim Besprühen, d.h. dem Sprühauftrag, sind die zum Steuern der Eindringtiefe verwendeten Verfahrensparameter beispielsweise die Viskosität des Bindemittels, der Feststoffgehalt des Bindemittels, der Durchmesser der Sprühdüsen und die Menge an versprühtem Bindemittel pro Zeiteinheit. Die oben genannten Parameter sowie deren genaue und zweckdienliche Einstellung zum Erreichen einer bestimmten Eindringtiefe des Bindemittels sind dem Fachmann bekannt. Die Beurteilung der Eindringtiefe des Bindemittels in das Filtermaterial geschieht mittels Auflichtmikroskop an einem Querschnitt des Filtermaterials. Der Anteil des getrockneten Bindemittels am Gesamtgewicht des Papiers beträgt 0,5 - 50 Gew.%, bevorzugt 5 - 20 Gew.%. Der Anteil des getrockneten Bindemittels bezieht sich im Sinne der Erfindung auf den Anteil des Bindemittels im Filtermaterial, das für 30 Minuten bei 100 °C in einem Umlufttrockenschrank getrocknet wurde.

Eine bevorzugte Ausführungsform des erfindungsgemäßen Filtermaterials ist ein Papier aus natürlichen Fasern, Synthesefasern, anorganischen Fasern oder Mischungen daraus, das auf der Siebseite, das heißt der dichteren Seite, mit einem Bindemittel in der Weise imprägniert ist, dass das Bindemittel etwa zwei Drittel der Papierdicke durchdringt, wobei die Fasern der Gegenseite bindemittelfrei bleiben. Dieses Filtermaterial hat die folgenden bevorzugten Eigenschaften: eine Flächenmasse von 50 g/m$^2$ - 400 g/m$^2$, besonders bevorzugt von 100 g/m$^2$ bis 300 g/m$^2$; eine Dicke von 0,1 mm - 2,0 mm, besonders bevorzugt von 0,5 mm - 1,5 mm; eine Luftdurchlässigkeit von 1 l/m$^2$s - 1500 l/m$^2$s, besonders bevorzugt von 5 l/m$^2$s - 800 l/m$^2$s; eine Porosität von 50 % - 90 %, besonders bevorzugt von 60 % - 80 %; einen Harzgehalt von 0,5 % - 50 %, besonders bevorzugt von 5 % - 20 %; einen Abscheidegrad für 4 μm-Partikel nach ISO 19438 von mind. 50 %, besonders bevorzugt von mind. 80 %; eine Standzeit nach ISO 19438 von mind. 1,0 g, besonders bevorzugt von mind. 1,5 g; und eine Wasserabscheidung nach ISO 19332 bei einer Anströmung von 4,5 ml/(cm$^2$*min) von mind. 30 %, besonders bevorzugt von mind. 40 %.

Im Rahmen der Erfindung ist es ohne weiteres möglich, dass das erfindungsgemäße Filtermaterial aus mehreren Lagen bzw. Schichten besteht. Weiterhin ist es auch möglich, dass vor und/oder nach dem erfindungsgemäßen Filtermaterial eine oder mehrere Lagen aus anderen Materialien vorgesehen sind.

Eine weitere bevorzugte Ausführungsform des erfindungsgemäßen Filtermaterials ist eine Kombination aus einem Papier und einem Meltblownvlies, wobei sich das Meltblownvlies mit der dichteren Seite auf der nicht imprägnierten Seite des Papiers befindet. Das Papier besteht aus natürlichen Fasern, Synthesefasern, anorganischen Fasern oder Mischungen daraus und ist auf der Siebseite, das heißt der dichteren Seite, mit einem Bindemittel in der Weise imprägniert, dass das Bindemittel etwa zwei Drittel der Papierdicke durchdringt, wobei die Fasern der Gegenseite bindemittelfrei bleiben. Das Papier kann die folgenden Eigenschaften haben: eine Flächenmasse von 50 g/m$^2$ - 400 g/m$^2$, bevorzugt von 100 g/m$^2$ bis 300 g/m$^2$; eine Dicke von 0,1 mm - 2,0 mm, bevorzugt von 0,5 mm - 1,5 mm; eine Luftdurchlässigkeit von 1 l/m$^2$s - 1500 l/m$^2$s, bevorzugt von 5 l/m$^2$s - 800 l/m$^2$s; eine Porosität von 50 % - 90 %, bevorzugt von 60 % - 80 % und einen Harzgehalt von 0,5 % - 50 %, bevorzugt von 5 % - 20 %. Das Meltblownvlies kann eine Flächenmasse von 10 g/m$^2$ - 200 g/m$^2$, bevorzugt von 20 g/m$^2$ bis 120 g/m$^2$; eine Dicke von 0,05 mm - 1,5 mm, bevorzugt von 0,1 mm - 1,0 mm und eine Luftdurchlässigkeit von 5 l/m$^2$s - 4000 l/m$^2$s, bevorzugt von 100 l/m$^2$s - 500 l/m$^2$s haben. Das gesamte Filtermaterial dieser Ausführungsform, das ein Papier und ein Meltblownvlies umfasst, hat vorzugsweise die folgenden Eigenschaften: eine Flächenmasse von 60 g/m$^2$ - 600 g/m$^2$, besonders bevorzugt von 120 g/m$^2$ bis 420 g/m$^2$; eine Dicke von 0,15 mm - 3,5 mm, besonders bevorzugt von 0,6 mm - 2,5 mm; eine Luftdurchlässigkeit von 1 l/m$^2$s - 1100 l/m$^2$s, besonders bevorzugt von 5 l/m$^2$s - 300 l/m$^2$s; einen Harzgehalt von 5 % - 50 %, besonders bevorzugt von 5 % - 20 %; einen Abscheidegrad nach ISO 19438 für 4 μm - Partikel von mind. 50 %, besonders bevorzugt von mind. 80 % und eine Standzeit nach ISO 19438 von mind. 1,0g, besonders bevorzugt von mind. 1,5g.

Die einzelnen Lagen des erfindungsgemäßen Filtermaterials können entweder mit einem Kleber oder über Schweißverbindungen oder eine Kombination daraus verbunden werden.

Vorteilhafte Kleber haben einen Erweichungspunkt von über 200°C. Das erfindungsgemäße Filtermaterial ist bevorzugt für die Verwendung bei Temperaturen von bis zu 150 °C und hohen hydrostatischen Drücken geeignet. Geeignete Kleber für diese Anwendung sind Polyurethankleber, Polyamidkleber oder Polyesterkleber. Besonders bevorzugt sind dabei Polyurethankleber, die mit der Luftfeuchtigkeit vernetzen. Die Kleber können entweder als Pulver oder aufgeschmolzen mittels Rasterwalzen oder Sprühdüsen aufgebracht werden. Das Auftragsgewicht des Klebers liegt typischerweise zwischen 5 - 20 g/m$^2$, bevorzugt zwischen 5 - 10 g/m$^2$.

Die Schweißverbindung kann sowohl durch eine Ultraschallanlage als auch durch einen Thermokalander erfolgen. Dabei werden die Polymere der zu verschweißenden Lagen entweder vollflächig oder bereichsweise aufgeschmolzen und miteinander verschweißt. Die bereichsweisen Schweißverbindungen können dabei beliebige geometrische Formen haben, wie zum Beispiel Punkte, gerade Linien, gekrümmte Linien, Rauten und Dreiecke. Die Fläche der bereichsweisen Schweißverbindungen beträgt vorteilhafterweise höchstens 10% der Gesamtfläche des erfindungsgemäßen Filtermaterials.

Verkleben und Verschweißen können auch beliebig miteinander kombiniert werden.

Das erfindungsgemäße Filtermaterial kann zur Flüssigkeitsfiltration verwendet werden, wobei das Filtermaterial von der nicht imprägnierten Seite angeströmt wird, d.h. die Flüssigkeit wird von der nicht imprägnierten Seite zur imprägnierten Seite durch das Filtermaterial geleitet. Die Flüssigkeit kann einen darin nicht löslichen Feststoff enthalten. Bevorzugt enthält die Flüssigkeit zwei nicht miteinander mischbare Flüssigkeiten.

Im erfindungsgemäßen Verfahren zur Trennung von zwei nicht miteinander mischbaren Flüssigkeiten werden die Flüssigkeiten so durch das erfindungsgemäße Filtermaterial geleitet, dass die Flüssigkeiten von der nicht imprägnierten Seite zur imprägnierten Seite des Filtermaterials strömen.

## Prüfmethoden

Flächenmasse nach DIN EN ISO 536

Dicke nach DIN EN ISO 534

Luftdurchlässigkeit nach DIN EN ISO 9237 bei 200 Pa Druckdifferenz

Anfangsabscheidegrad von 4 μm-Partikeln und Staubspeicherfähigkeit nach ISO 19438 mit 200 cm$^2$ Probenfläche, 100 mg/l Aufstromkonzentration und 0,71 l/min Volumenstrom. Testende bei 0,7 bar Differenzdruckanstieg.

Wasserabscheidung nach ISO 16332 mit den Testbedingungen nach Tabelle 1, gemessen an Flachproben mit einer Fläche von 225 cm$^2$. Die Probe wird so eingespannt, dass sie senkrecht zu ihrer Oberfläche angeströmt wird.

Tabelle 1

| Messtemperatur | 23 °C $\pm$ 2 °C |
|---|---|
| Messflüssigkeit | Handelsüblicher Dieselkraftstoff mit einer Oberflächenspannung von 15 mN/m $\pm$ 3 mN/m |
| Druckdifferenz zwischen den beiden Blendenöffnungen | 0,26 bar |
| Volumenstrom | 1100 ml/min |
| Anströmung | 4,5 ml/cm$^2$min |
| Wasserzudosierung zum Dieselkraftstoff | 1500 ppm $\pm$ 170 ppm |
| Mittlere Tröpfchengröße | 60 $\mu$m |

Die Porosität berechnet sich aus der tatsächlichen Dichte des Filtermediums und der durchschnittlichen Dichte der eingesetzten Fasern nach folgender Formel:

$$\text{Porosität} = (1 - \text{Dichte Filtermedium [g/cm}^3\text{]}/ \text{Dichte Fasern [g/cm}^3\text{]})*100\%$$

Der Anteil des Imprägniermittels in einem Papier berechnet sich nach folgender Formel:

$$\text{Imprägniermittelanteil in \%} = (\text{FM Imp./FM Papier}) * 100\%$$

mit FM Imp. = Masse des trockenen Imprägniermittels pro m$^2$ Papier und
FM Papier = Flächenmasse des imprägnierten Papiers,

wobei vor der Bestimmung des Imprägniermittelanteils das Papier 30 Minuten bei 100 °C in einem Umlufttrockenschrank getrocknet wird.

**Beispiele**

Beispiel 1 (Vergleichsbeispiel)

Nach dem allgemein bekannten Verfahren zur Papierherstellung wurde in einer Papiermaschine eine Papierbahn aus 100 % Zellulose erzeugt. In einem getrennten Arbeitsschritt wurde dieses Papier mit einer methanolischen Phenolharzlösung vollständig durchimprägniert und getrocknet. Das Papier ist unter der Bezeichnung K13i15SG von der Fa. NEENAH Gessner GmbH, Bruckmühl erhältlich und hat eine Flächenmasse von 235 g/m$^2$, eine Dicke von 0,55 mm, eine Porosität von 72 %, eine Luftdurchlässigkeit von 8 l/m$^2$s und einen Harzgehalt von 15 Gew. %.
An diesem Filtermaterial wurde der Anfangsabscheidegrad für 4 $\mu$m Partikel nach ISO 19438, die Staubspeicherfähigkeit nach ISO 19438 und die Wasserabscheidung nach ISO 16332 bestimmt. Das Ergebnis ist in Tabelle 2 dargestellt.

Beispiel 2 (Erfindung)

Nach dem allgemein bekannten Verfahren zur Papierherstellung wurde in einer Papiermaschine eine Papierbahn aus 100 % Zellulose erzeugt. In einem getrennten Arbeitsschritt wurde dieses Papier mit dem gleichen Imprägniermittel wie in Beispiel 1 imprägniert, nur mit dem Unterschied, dass das Imprägniermittel diesmal nur einseitig mittels Walzenauftrag auf die Siebseite des Papiers aufgebracht wurde. Nach dem Trocknen hatte das Papier eine Flächenmasse von 221 g/m$^2$, eine Dicke von 0,49 mm, eine Luftdurchlässigkeit von 9 l/m$^2$s, eine Porosität von 70 % und einen Harzgehalt von 10 %. Die Eindringtiefe des Bindemittels in das Papier betrug 60 % der Papierdicke. An diesem Filtermaterial wurde der Anfangsabscheidegrad für 4 $\mu$m Partikel nach ISO 19438, die Staubspeicherfähigkeit nach ISO 19438 und die Wasserabscheidung nach ISO 16332 bestimmt. Das Ergebnis ist in Tabelle 2 dargestellt.

Tabelle 2

| | Beispiel 1 (Vergleich) | Beispiel 2 (Erfindung) |
|---|---|---|
| Anfangsabscheidegrad nach ISO 19348 | 98,10 % | 98,00 % |
| Staubspeicherfähigkeit nach ISO 19348 | 0,64 g | 1,56 g |
| Wasserabscheidung nach ISO 16332 | 13 % | 44 % |

**Patentansprüche**

1. Filtermaterial, insbesondere für die Filtration von Flüssigkeiten, wobei der Anteil des getrockneten Bindemittels am Gesamtgewicht des Filtermaterials 0,5 - 50 Gew.% beträgt, **dadurch gekennzeichnet, dass** das Filtermaterial auf nur einer Seite mit Bindemittel in der Weise imprägniert ist, dass die gegenüberliegende Seite frei von Bindemittel ist und das Bindemittel von der imprägnierten Seite des Filtermaterials zur gegenüberliegenden Seite mindestens die Hälfte und höchstens drei Viertel der Dicke des Filtermaterials durchdringt.

2. Filtermaterial nach Anspruch 1, **dadurch gekennzeichnet, dass** das Filtermaterial zumindest ein Material umfasst, ausgewählt aus der Gruppe, bestehend aus nassgelegten Vliesen, trockengelegten Vliesen, Geweben und Schäumen.

3. Filtermaterial nach Anspruch 1 oder 2, **dadurch gekennzeichnet, dass** das Filtermaterial eine Flächenmasse von 50 g/m$^2$ - 400 g/m$^2$ besitzt.

4. Filtermaterial nach einem der Ansprüche 1 bis 3, **dadurch gekennzeichnet, dass** das Filtermaterial eine Dicke von 0,1 mm - 2,0 mm besitzt.

5. Filtermaterial nach einem der Ansprüche 1 bis 4, **dadurch gekennzeichnet, dass** das Filtermaterial eine Luftdurchlässigkeit von 1 l/m$^2$s - 1500 1/m$^2$s besitzt.

6. Filtermaterial nach einem der Ansprüche 1 bis 5, **dadurch gekennzeichnet, dass** das Filtermaterial eine Porosität von 50 % - 90 % besitzt.

7. Filtermaterial nach einem der Ansprüche 1 bis 6, **dadurch gekennzeichnet, dass** das Filtermaterial auf der nicht imprägnierten Seite mit der Siebseite eines Meltblownvlieses verbunden ist.

8. Filtermaterial nach einem der vorhergehenden Ansprüche, **dadurch gekennzeichnet, dass** das Filtermaterial auf der imprägnierten Seite mit einem mittels Kalander verdichteten Meltblownvlies verbunden ist.

9. Filterelement, umfassend ein Filtermaterial nach einem der vorhergehenden Ansprüche.

10. Verwendung des Filtermaterials nach einem der Ansprüche 1 bis 8 zur Flüssigkeitsfiltration, wobei die Flüssigkeit das Filtermaterial von der nicht imprägnierten Seite anströmt.

11. Verwendung nach Anspruch 10, wobei die Flüssigkeit einen darin nicht löslichen Feststoff enthält oder die Flüssigkeit zwei nicht miteinander mischbare Flüssigkeiten enthält.

12. Verfahren zur Trennung von zwei nicht miteinander mischbaren Flüssigkeiten, wobei die Flüssigkeiten in der Art durch ein Filtermaterial nach einem der Ansprüche 1 bis 8 geleitet werden, dass die Flüssigkeiten von der nicht imprägnierten Seite zur imprägnierten Seite des Filtermaterials strömen.

**Claims**

1. Filter material, in particular for filtration of liquids, wherein the proportion of dried binder is 0.5 - 50 wt.% of the total weight of the filter material, **characterised in that** the filter material is impregnated with binder on only one side such that the opposite side is free of binder and the binder penetrates from the impregnated side of the filter material to the opposite side at least half and no more than three quarters of the thickness of the filter material.

2. Filter material according to claim 1, **characterised in that** the filter material comprises at least one material selected from the group consisting of wet-laid non-wovens, dry-laid non-wovens, fabrics and foams.

3. Filter material according to claim 1 or 2, **characterised in that** the filter material has a grammage of 50 g/m$^2$ - 400 g/m$^2$.

4. Filter material according to one of claims 1 to 3, **characterised in that** the filter material has a thickness of 0.1 mm - 2.0 mm.

5. Filter material according to one of claims 1 to 4, **characterised in that** the filter material has an air permeability of 1 l/m$^2$s - 1,500 l/m$^2$s.

6. Filter material according to one of claims 1 to 5, **characterised in that** the filter material has a porosity of 50 % - 90 %.

7. Filter material according to one of claims 1 to 6, **characterised in that** the filter material is connected on the non-impregnated side to the wire side of a melt-blown non-woven.

8. Filter material according to one of the preceding claims, **characterised in that** the filter material is connected on the impregnated side to a melt-blown non-woven compressed by means of a calender.

9. Filter element comprising a filter material according to one of the preceding claims.

10. Use of the filter material according to one of claims 1 to 8 for liquid filtration, wherein the liquid flows against the filter material from the non-impregnated side.

11. Use according to claim 10, wherein the liquid contains a solid which is non-soluble therein or the liquid contains two liquids which cannot be mixed with one another.

12. Method for separating two liquids which cannot be mixed with one another, wherein the liquids are passed through a filter material according to one of claims 1 to 8 such that the liquids flow from the non-impregnated side to the impregnated side of the filter material.

**Revendications**

1. Matériau de filtre, en particulier pour la filtration de liquides, dans lequel la proportion du liant sec au poids total du matériau de filtre est de 0,5 à 50 % en poids, **caractérisé en ce que**
le matériau de filtre est imprégné uniquement sur un côté avec un liant de telle sorte que le côté opposé est dépourvu de liant, et le liant du côté imprégné du matériau de filtre pénètre dans le côté opposé sur au moins la moitié et au plus les trois quarts de l'épaisseur du matériau de filtre.

2. Matériau de filtre selon la revendication 1, **caractérisé en ce que** le matériau de filtre comprend au moins un matériau choisi dans le groupe consistant en matériau non tissé par voie humide, matériau non tissé à sec, tissus et mousses.

3. Matériau de filtre selon la revendication 1 ou 2, **caractérisé en ce que** le matériau de filtre possède un grammage de 50 g/m$^2$ à 400 g/m$^2$.

4. Matériau de filtre selon l'une des revendications 1 à 3, **caractérisé en ce que** le matériau de filtre possède une épaisseur de 0,1 mm à 2,0 mm.

5. Matériau de filtre selon l'une des revendications 1 à 4, **caractérisé en ce que** le matériau de filtre possède une perméabilité à l'air de 1 l/m$^2$s à 1500 l/m$^2$s.

6. Matériau de filtre selon l'une des revendications 1 à 5, **caractérisé en ce que** le matériau de filtre possède une porosité de 50 % à 90 %.

7. Matériau de filtre selon l'une des revendications 1 à 6, **caractérisé en ce que** le matériau de filtre est lié sur le côté non imprégné avec le côté de tamisage d'un non tissé soufflé à l'état fondu.

8. Matériau de filtre selon l'une des revendications précédentes, **caractérisé en ce que** le matériau de filtre sur le côté imprégné est lié avec un non tissé soufflé à l'état fondu étanchéifié au moyen d'une calandre.

9. Elément de filtre, comprenant un matériau de filtre selon l'une des revendications précédentes.

10. Utilisation du matériau de filtre selon l'une des revendications 1 à 8 pour la filtration d'un liquide, dans laquelle le liquide traverse le matériau de filtre du côté non imprégné.

11. Utilisation selon la revendication 10, dans laquelle le liquide contient un solide non soluble dans celui-ci, ou le liquide contient deux liquides non miscibles l'un dans l'autre.

12. Procédé pour la séparation de deux liquides non miscibles l'un dans l'autre, dans lequel les liquides sont conduits dans un matériau de filtre selon l'une des revendications 1 à 8, de telle sorte que les liquides s'écoulent du côté non imprégné vers le côté imprégné du matériau de filtre.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010011512 A1
- US 3096230 A
- US 3106528 A
- US 3116245 A
- US 4119543 A
- DE 2723528 A1
- GB 572126 A
- WO 03020401 A1
- US 4340563 A
- US 3802817 A
- US 3855046 A
- US 3692618 A
- US 3171820 A
- DE 1504551 A
- DE 601435 A
- GB 1111928 A

**In der Beschreibung aufgeführte Nicht-Patentliteratur**

- **W. ALBRECHT ; H. FUCHS ; W. KITTELMANN.** Vliesstoffe. Wiley-VCH, 2000
- **VAN A. WENTE.** Superfine Themoplastic Fibers. *Industrial Engineering Chemistry,* vol. 48, 1342-1346